# EUROPEAN PATENT SPECIFICATION

(11) **EP 0 789 990 B1**
(45) Date of publication and mention of the grant of the patent: **18.04.2001**
(21) Application number: 97101529.2
(22) Date of filing: 31.01.1997
(51) Int. Cl.: A01D 41/14, A01D 34/30

(54) **A head assembly for a cereal combine-harvester**
Mähbrett für Getreide-Mähdrescher
Tablier de coupe pour moissonneuse-batteuse de céréales

(30) Priority: 16.02.1996 IT TO960102
(43) Date of publication of application: 20.08.1997
(73) Proprietor: CAPELLO F.LLI RENATO E FRANCESCO S.N.C., I-12020 Fraz. Madonna dell'Olmo (Cuneo) (IT)
(72) Inventor: Declementi, Giacomo, 12021 Acceglio (CN) (IT); Dutto, Bruno Lorenzo, 12025 Dronero (CN) (IT); Battisti, Lorenzo, 12020 Valgrana (CN) (IT)
(74) Representative: Robba, Eugenio

(56) References cited:
- EP-A- 0 131 853
- EP-A- 0 373 406
- EP-A- 0 491 405
- EP-A- 0 634 088
- DE-A- 2 026 190
- DE-U- 8 535 733
- GB-A- 2 055 539
- US-A- 4 910 946

## Description

The present invention relates to a head member or assembly adapted to be mounted on combine-harvester machines (harvester-theshers) for picking cereals, and more particularly to a head assembly of the above type that can be folded for reducing the size, e.g. during transportation.

There are known cereal head members to be fitted to combine-harvesters that are equipped with devices for folding the head member and rendering the whole assembly easier to be used.

For example, a head member manufactured by Karl Geringhoff GmbH & Co, KG Machinenfabrik provides a head member divided in two parts, with a movable parte that can be folded over the fixed part until it rests over the latter. The so folded head member can then be centered with respect to the harvester tractor so that this machine can move more easily over the ground without the risk of overturning.

On the other hand in the combine-harvester manufactured by Claas the foldable head member is divided in two parts foldable with respect to the central longitudinal plane of the machine, and both parts can rotate about an axis orthogonal to the head member, from a position orthogonal to the advancing direction to a position parallel to the advancing direction, in which they lay side by side and at an angle of 90° to the operative position.

The object of the present invention is to provide a different solution to the above problem of reducing the occupancy of the roadway during the transportation of a combine-harvester machine, that in addition to allowing a quick and easy folding of the head member further maintains a perfect synchronization of the cutting blade, and reduces the number of working stops due to faults and/or malfunctions.

The head assembly for a cereal combine-harvester in accordance with the present invention comprises an auger, a pickup reel or comb that can be raised with respect to the auger, and a cutting blade located between aligned pairs of teeth, and is characterized in that:
a) the motion to the auger, the pickup reel and the blade is provided on one side only of said head assembly;
b) said pickup reel is adapted to be folded into three parts, i.e. a central stationary part and two lateral parts that can be moved by means of cylinders actuated by a pressurized fluid;
c) said auger is adapted to be folded into three parts, i.e. a central stationary part and two lateral parts that can be moved by means of cylinders actuated by a pressurized fluid, with the transmission of the rotation movement being out of center with respect to the rotation axis of said auger;
d) said blade is formed by three sections, i.e. a central fixed section and two movable lateral sections, is driven at the rear and located between the teeth pairs;
whereby said head assembly comprises two lateral parts adapted to be folded over and to rest onto the fixed central part.

More precisely, the transmission of the rotation motion is accomplished by a motor acting on one side only of a lateral part of the auger that in turn drives such lateral auger part, and at the opposed end of said directly driven part there are provided a pair of gears meshing with each other, one gear being fastened to and coaxial with the driven lateral part of the auger, while the other gear is fastened to and coaxial with a first shaft the axis of which is parallel to but not coincident with the auger rotation axis. Said shaft can axially be coupled through a front clutch or the like with a shaft of the central stationary part, aligned with the former and carrying a third gear that in turn engages a fourth gear fastened to the central part of the auger.

When the three auger parts are aligned with each other and the shafts are engaged or coupled with each other, the rotation motion is transmitted by the driven lateral part of the auger to the central and the other lateral parts for rotating the whole auger. When the shafts are disengaged the parts of the auger are not subjected to any rotation.

The cutting blade is formed by three elongated serrated sections and is driven by a second rotating motor having a projecting member reciprocating in the direction of the length of the blade.

The means for moving the blade comprises two groups of aligned rods, parallel to each other and to the blade, each group comprising three sections or rods, each of the rods of the first group being directly fastened to the corresponding blade section, while the rods of the second group is connected to the rods of the first group through members adapted to transmit a reciprocating motion between the two groups.

In accordance with a first embodiment said means for moving the blade comprises toothed blocks secured to each rod and a gear meshing with the two facing blocks and acting as a pinion. One of the rods of the first group 43 is directly coupled to the reciprocating member.

When a motion along one direction is imparted to the rod of the first group, this motion is transmitted by contact to the subsequent rods of the first group, thus causing the displacement of the serrated blade along the same direction. At the same time, the rods of the group directly fastened to the blade transmit the motion - along the opposed direction - to the rods of the second group that are brought into a starting position for the return stroke.

Thereafter the inversion of the reciprocating movement imparted to the rod directly coupled to member pulls in a contrary direction such rod, and through the interposed members pushes in the opposed direction the corresponding rods of the second group. This latter rods will act (push) on the subsequent rods of the second group and in turn each of these rods will move the corresponding rod of the first group, thus moving as a one-piece member the groups and therefore the blade. This way the blade is returned in the starting position and is ready for a new stroke, and a reciprocating movement of the blade is achieved with a construction that is foldable.

According to a second embodiment, the reciprocating means for the blade is partially similar to that of the first embodiment, i.e. comprises three blade sections, a first group of three aligned rods, each directly fastened to the corresponding section of blade, and a second group of three aligned rods. According to this embodiment the terminal ends of the corresponding lateral rods are connected to each other by two rocker arms or cams each comprising a short arm pivotally connected with the rods at both ends. Additionlly at the center of one of the rocker arms there is connected the shaft of the second motor that periodically reverses the direction of rotation in this embodiment.

When the motor rotated through a first angle in a first direction the rocker arm drives the first rod and the subsequent aligned rods of the group, and will cause a rotation of the return rocker arm at the opposed end, this rotation in turn driving in a similar manner but along the opposed direction the rods of the second group. When the motor rotation is reversed, the rocker arm coupled to the motor applies a push to the aligned rods of the group that in turn rotate the return rocker arm 61, thus causing the return movement of the rods directly connected to the blade, i.e. the return movement of the blade, thus realizing the reciprocating movement of the serrated blade.

Inside the auger there is provided a shaft, the axes of which are parallel but not coincident with the central axis of the auger, that is fastened at a selectable angle to the fixed walls that divide the rotating parts of the auger. This shaft carries idle T-shaped sleeves on which there are mounted radial pins each having an opposed end protruding through a corresponding hole in the longitudinal wall of the auger part. This way the relative position of the shaft with respect to the auger (that is near or far away) causes the protruding or the retraction of the pins from the wall of the auger when the auger rotates. Thus the rotation of the auger brings such pins to the maximun protrusion when they are in a "high" position, i.e far from the ground, and to a substantially null protrusion when they are going to contact the ground.

The head member of the invention will now be described in details with particular reference to the attached drawings that illustrate a non limiting embodiment of the invention, and in which:
Fig. 1 is a perspective view of the head member of the invention with the pickup reel lowered, in an open position;
Fig. 2 is a perspective view of the head member di Fig. 1 with the movable parts folded over the central part;

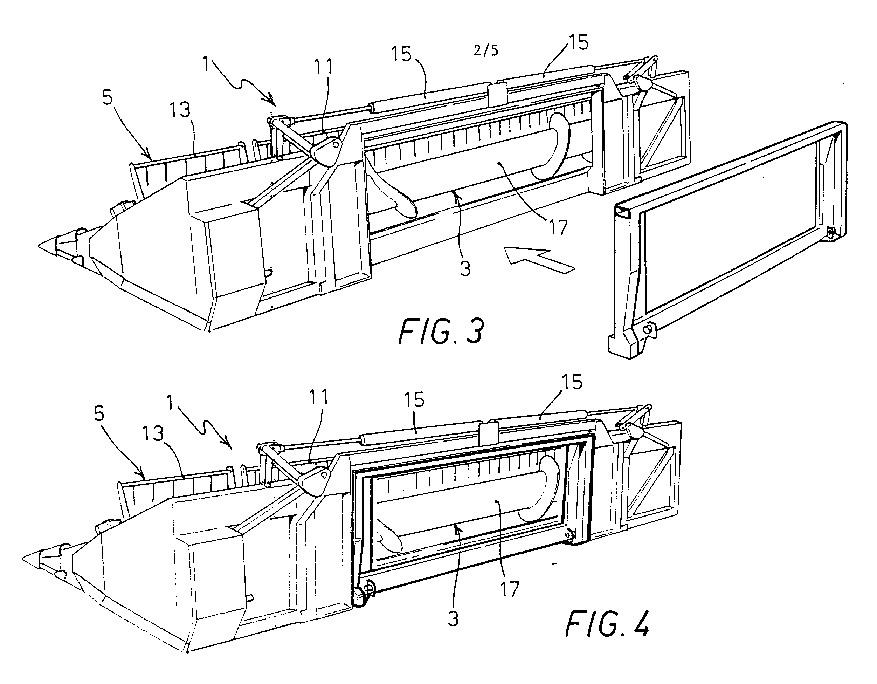

Fig. 3 is a perspective back view of the head member of Fig. 1 with the access frame detached;
Fig. 4 is a perspective view, similar to Fig. 3, with the access frame applied;
Fig. 5 is a perspective view of the head member of the invention, open and with the pickup reel raised;
Fig. 6 is a schematic perspective view of an embodiment of the reciprocating means of the serrated blade;
Fig. 7 is a perspective view, similar to Fig. 6, illustrating another embodiment of the reciprocating means for moving the serrated blade;
Fig. 8 is a schematic perspective view illustrating the means for rotating the auger;
Fig. 9 is a partial perspective view illustrating the retractable tips protruding from the pickup reel, the radial displacement of which is combined with the movement of the auger; and
Fig. 10 is a partial perspective view illustrating the insertion of a blade section within the seats of the teeth cooperating with the blade.

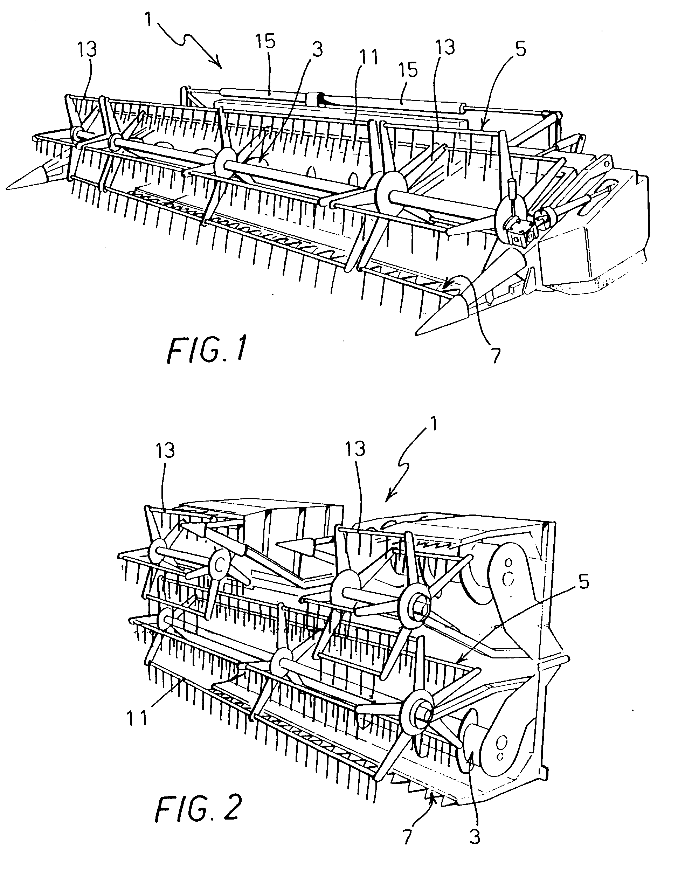

As shown in the Figures 1, 2 and 5, a cereal harvester head assembly in accordance with the present invention is formed by a head member 1 adapted to be mounted on a harvester (not shown) and comprising an auger 3, a pickup reel 5 that can be raised with respect to the auger 3, and a cutting blade 7 inserted and movable between pairs of teeth 9 (Fig. 10).

In said head member 1 the transmission of the motion to the auger 3, the pickup reel 5 and the cutting blade 7 is provided on one side only of the head assembly 1.

As illustrated in Fig.s 2 and 5, the pickup reel 5 can be raised with respect to the auger and is adapted to be folded into three parts, i.e. a central stationary part 11 and two lateral parts 13 that can be moved (i.e. rotated) by means of cylinders 15 actuated by a pressurized fluid (see Fig. 1).

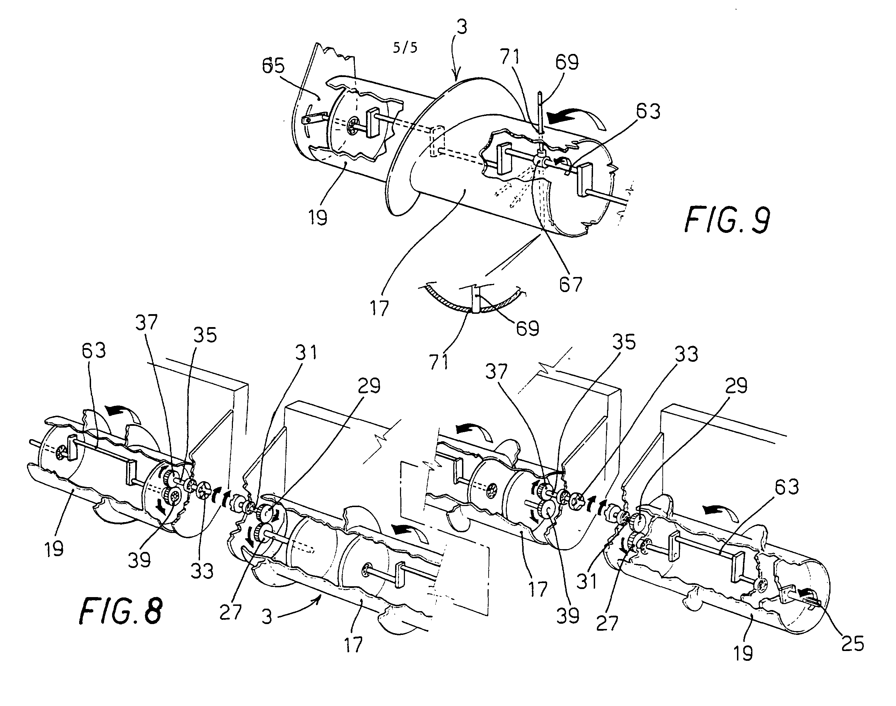

As better shown in Figures 8 and 9, also the auger 3 can be folded into three parts, namely a central stationary part 17 and two lateral parts 19 that can be moved (i.e. rotated) by means of cylinders 15 actuated by a pressurized fluid. Stationary walls 65 are provided at the ends between the parts 17 and 19. The transmission of the rotation motion to the auger 3 is eccentric with respect to the rotatory axis of the auger.

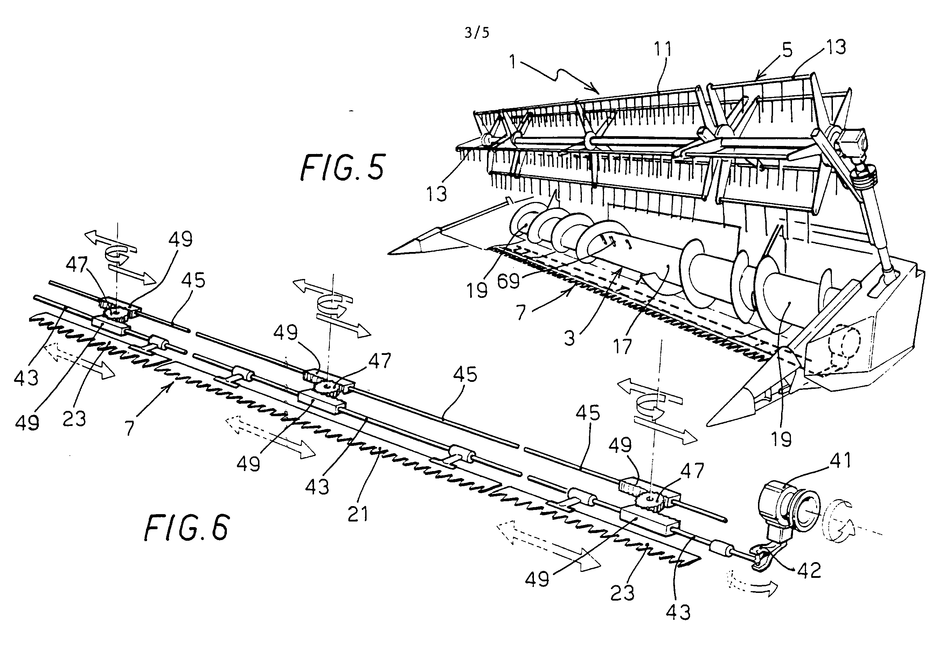

As shown in Figures 6, 7 and 10, the cutting blade 7 is a serrated blade formed by three sections, and more particularly a central section 21 and two lateral sections 23, driven at the rear and located between pairs of teeth 9 fastened to a pair of supports similarly divided in three parts.

The transmission of the rotation motion to the auger 3 is obtained through a motor (not shown in the Figures), coupled to a shaft portion 25 at one end of a lateral auger part 19 for rotating said auger part 19.

At the opposed end of said directly driven part 19 there are provided a pair of gears 27, 29 meshing with each other, one gear 27 being fastened to and coaxial with the driven lateral part 19 of the auger, while the other gear 29 is fastened to and coaxial with a shaft 31 the axis of which is parallel to but not coincident with the auger rotation axis. As shown in Figure 8, inside the parts 19 there are provided connections comprising eccentric shafts 63.

The shaft 31 passes through a hole in the wall 65 of part 19 and can axially be coupled through a front clutch 33 or the like with a shaft 35 of the central stationary part 17, aligned with the former and carrying a gear 37 that in turn engages a fourth gear 39 fastened to the central part 17 of the auger. A similar arrangement is provided between the central part 17 and the other lateral part 19, as illustrated in figure 8. When the three parts 19, 17 and 19 are aligned with each other and the shafts 31, 35 are engaged or coupled with each other, the rotation motion is transmitted by the driven lateral part 19 of the auger to the central and the other lateral sections. When the shafts 31, 35 are disengaged the parts 19, 17 of the auger 3 are not subjected to any rotation.

The cutting blade 7 is formed by three elongated serrated sections 21, 23, 21 and is driven by a second rotating motor 41 having a projecting member 42 reciprocating in the direction of the length of the blade 7.

The means for reciprocating the blade 7 will now be disclosed with details.

In accordance with a first embodiment illustrated in Figure 6, the means for moving the blade 7 comprises two groups of aligned rods 43, 45, parallel to each other and to the blade 7, each group comprising three sections or rods, each of the rods of the first group 43 being directly fastened to the corresponding section of blade 7, while each of the rods of the second group 45 is connected to the corresponding (laterally adjacent) rod of the first group 43 through toothed blocks 49 and fixed gears 47. More precisely a toothed block 49 is secured to each rod and a gear 47 meshes with the two facing blocks acting as racks. One of the rods of the first group 43 is directly coupled to the reciprocating member 42.

When a motion along one direction is imparted to the rod of the first group 43 by member 42, this motion is transmitted by contact to the subsequent rods of the first group, thus causing the displacement of the serrated blade 7 along the same direction. At the same time, the rods 43 of the group directly fastened to the blade transmit the motion - along the opposed direction - to the rods of the second group 45 that are brought into a starting position for the return stroke.

Thereafter the inversion of the reciprocating movement imparted to the rod of the group 43 directly coupled to member 42 pulls in a contrary direction such rod, and through the members 49-47-49 pushes in the opposed direction the corresponding rods of the second group 45. This latter rods will act (push) on the subsequent rods of the second group and in turn each of these rods will move the corresponding rod of the first group 43, thus moving as a one-piece member the group 43 and therefore the blade 7. This way the blade is returned in the starting position and is ready for a new cycle, and a reciprocating movement of the blade is achieved with a construction that is foldable.

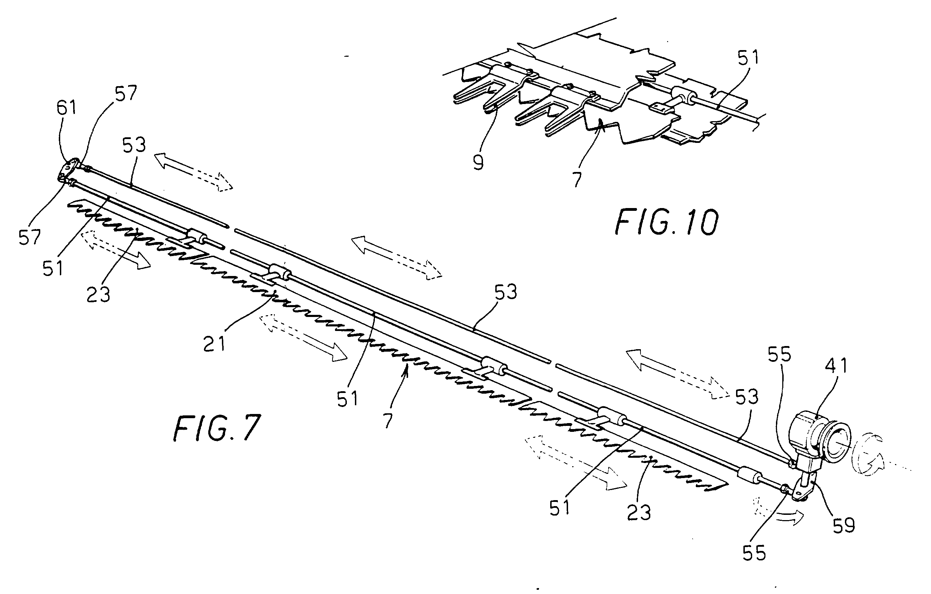

According to a second embodiment illustrated in Figure 7, the reciprocating means for the blade 7 is partially similar to that of the first embodiment, i.e. comprises three blade sections, a first group of three aligned rods 51 each directly fastened to the corresponding sections of blade 7, and a second group of three aligned rods 53. According to this embodiment the terminal ends 55 and 57 of the corresponding lateral rods are connected to each other by two rocker arms or cams 59, 61, each comprising a short arm pivotally connected with the rods at both ends. Additionlly at the center of rocker arm 59 there is connected the shaft of the second motor 41 that periodically reverses the direction of rotation in this embodiment.

When the motor 41 rotated through a first angle in a first direction the rocker arm 59 drives the first rod 51 and the subsequent aligned rods of the group, and will cause a rotation of the return rocker arm 61 at the opposed end, this rotation in turn driving in a similar manner but along the opposed direction the rods 53 of the second group. When the motor rotation is reversed, the rocker arm 59 applies a push to the rod 53 and to the subsequent rods of the aligned group that in turn rotate the rocker arm 61, thus causing the return movement of the rods directly connected to the blade, i.e. the return movement of the blade, thus realizing the reciprocating movement of the serrated blade 7.

As better shown in Figures 8 and 9, the three parts of the auger 3 are formed as hollow cylindrical bodies. Inside these cylindrical bodies there is provided eccentric shafts 63, the axes of which are parallel but not coincident with the central axis of the auger 3. As illustrated in Figure 9 for the central part 19, the shaft 63 is fastened at a selectable angle to the fixed walls 65 that divide the rotating parts of the auger; this eccentric shaft 63 carries idle T-shaped sleeves 67 on which there are mounted radial pins 69 each having an opposed end protruding through a corresponding hole 71 in the longitudinal wall of the auger part. This way the relative position of the shaft 63 with respect to the auger 3 (that is near or far away) causes the protruding or the retraction of the pins 69 from the wall of the auger when the auger rotates. Thus the rotation of the auger 3 brings such pins to the maximun protrusion when they are in a "high" position, i.e far from the ground, and to a substantially null protrusion when they are going to contact the ground.

From the above it is evident that the subject head assembly comprises members that are foldable into three parts, with a fixed central part and two lateral parts foldable over the central part until they rest thereon, and that the head assembly can be folded into three parts without any interference between the driving and driven components.

## Claims

1. A cereal head assembly (1) for a combine-harvester machine comprising an auger (3), a pickup reel (5) that can be raised with respect to said auger (3), and a cutting blade (7) located between pairs of teeth (9), characterized in that:
a) the motion to the auger (3), the pickup reel (5) and the blade (7) is provided on one side only of said head assembly;
b) said pickup reel (5) is adapted to be folded into three parts, i.e. a central stationary part (11) and two lateral parts (13) that can be moved by means of cylinders (15) actuated by a pressurized fluid;
c) said auger (3) is adapted to be folded into three parts, i.e. a central stationary part (17) and two lateral parts (19) that can be moved by means of cylinders (15) actuated by a pressurized fluid, with the transmission of the rotation movement being out of center with respect to the rotation axis of said auger (3);
d) said blade (7) is formed by three sections, i.e. a central fixed section (21) and two movable lateral sections (23), is driven at the rear and located between said pairs of teeth (9); whereby said head assembly (1) comprises two lateral parts adapted to be folded over and to rest onto a fixed central part.

2. A head assembly as claimed in claim 1, characterized in that the transmission of said rotation motion to the auger (3) is accomplished through a first motor mounted at one end (25) of a lateral part (19) of said auger that drives said lateral part (19) of the auger; at the other end of said lateral part (19) being provided a pair of gears (27, 29) meshing with each other, one (27) of said gears being fastened to and coaxial with said lateral part (19) of the auger, while the other gear (29) is fastened to and coaxial with a first shaft (31) the axis of which is parallel to but not coincident with the auger rotation axis; in that a front clutch (33) is provided for axially coupling said first shaft (31) with a second shaft (35) of the central stationary part (17), said second shaft (35) being aligned with said first shaft (31) and carrying a third gear (37) that in turn engages a fourth gear (39) fastened to the central part (17) of the auger, so that when said shafts (31, 35) are coupled to each other, the rotation motion is transmitted by the driven lateral part (19) of the auger to the central part (17) and the other lateral section (19).

3. A head assembly as claimed in claim 1 and 2, characterized in that said blade (7) is a serrated blade driven by reciprocating means.

4. A head assembly as claimed in claim 3, characterized in that said reciprocating means comprises a second rotating motor (41) having a projecting member (42) reciprocating along the length of the blade (7), and in that said means comprises two groups of aligned rods (43, 45) parallel to each other and to said blade (7), each group comprising three rods, the rods of a first one (43) of said groups of aligned rods being directly connected to said blade (7), and the rods of the second group (45) being connected to those of the first group (43) through devices for transmitting a reciprocating motion between said two groups (Fig. 6).

5. A head assembly as claimed in claim 4, characterized in that each of said devices for transmitting the reciprocating motion comprises a fixed gear (47) engaging a pair of toothed blocks (49) acting as racks and provided on two corresponding rods of said groups (43, 45), whereby the movement in one direction imparted to a rod (43) of the said groups (43, 45) connected to the projecting member (42) of the rotating motor (41) is transmitted by contact to the subsequent rods of the same group, thus causing the displacement of the serrated blade (7) in the same direction and the displacement - along the opposed direction - of the rods (45) of the second group; and whereby the inversion of the reciprocating movement imparted to the rod (43) coupled to the reciprocating member (42) pulls in a contrary direction such rod (43), and through said devices for transmitting the reciprocating motion (49, 47, 49) pushes in the opposed direction the corresponding rods of the second group (45).

6. A head assembly as claimed in claim 3, characterized in that said reciprocating means comprises two groups of aligned rods (51, 53) parallel to each other and to said blade (7), each group comprising three rods, the rods of a first one (43) of said groups of aligned rods being directly connected to said blade (7), the terminal ends (55, 57) of the corresponding lateral rods being connected to each other by two rocker arms (59, 61), each comprising a short arm pivotally connected with the rods at both ends, and in that at the center of one (59) of said rocker arms there is connected the shaft of a second motor (41) that periodically reverses the direction of rotation. (Fig.7).

7. A head assembly as claimed in the preceding claims, characterized in that within said auger (3) formed as a hollow cylindrical body there is provided an eccentric shaft (63), with the axis parallel but not coincident with the central axis of said auger (3), said shaft is fastened at a selectable angle to fixed walls (65) separating the parts of the auger; and in that said eccentric shaft (63) carries idle sleeves (67) on which there are mounted radial pins (69) each having an opposed end protruding through a corresponding hole (71) in the longitudinal wall of the auger (3), so that the relative position of the shaft (63) with respect to the auger (3) causes the protruding or the retraction of said pins (69) from the wall of the auger when the auger rotates whereby the rotation of the auger (3) brings such tips to the maximun protrusion when they are in a "high" position, i.e far from the ground, and to a substantially null protrusion when they are going to contact the ground.

## Patentansprüche

1. Getreideschneidwerk (1) für einen Mähdrescher mit einer Schnecke (3), einer Pick-up-Haspel (5), die gegenüber der Schnecke (3) angehoben werden kann, und einem Schneidmesser (7), das zwischen Zähnepaaren (9) angeordnet ist, dadurch gekennzeichnet, daß:
a) die Bewegung der Schnecke (3), der Pick-up-Haspel (5) und des Messers (7) nur auf einer Seite des Schneidwerks vorgesehen ist;
b) die Pick-up-Haspel (5) geeignet ist, in drei Teile eingeklappt zu werden, d. h. ein feststehendes Mittelteil (11) und zwei Seitenteile (13), die mittels Zylindern (15) bewegt werden können, die durch ein Druckfluid betätigt werden;
c) die Schnecke (3) geeignet ist, in drei Teile eingeklappt zu werden, d. h. ein feststehendes Mittelteil (17) und zwei Seitenteile (19), die mittels Zylindern (15) bewegt werden können, die durch ein Druckfluid betätigt werden, wobei die Übertragung der Drehbewegung gegenüber der Drehachse der Schnecke (3) außermittig ist;
d) das Messer (7) durch drei Bereiche, d. h. einen festen Mittelbereich (21) und zwei bewegliche Seitenbereiche (23), gebildet, von hinten angetrieben und zwischen den Zähnepaaren (9) angeordnet ist; wodurch das Schneidwerk (1) zwei Seitenteile aufweist, die geeignet sind, über einem festen Mittelteil eingeklappt zu werden und darauf zu ruhen.

2. Schneidwerk nach Anspruch 1, dadurch gekennzeichnet, daß die Übertragung der Drehbewegung auf die Schnecke (3) durch einen ersten Motor erreicht wird, der an einem Ende (25) eines Seitenteils (19) der Schnecke angeordnet ist und das Seitenteil (19) der Schnecke antreibt; wobei am anderen Ende des Seitenteils (19) ein Paar ineinandergreifende Zahnräder (27, 29) vorgesehen ist, eines (27) der Zahnräder am Seitenteil (19) der Schnecke befestigt und koaxial dazu ist, während das andere Zahnrad (29) an einer ersten Welle (31) befestigt und koaxial dazu ist, deren Achse parallel zur Schneckendrehachse ist, aber nicht damit zusammenfällt; dadurch, daß eine Frontkupplung (33) zum axialen Koppeln der ersten Welle (31) mit einer zweiten Welle (35) des feststehenden Mittelteils (17) vorgesehen ist, wobei die zweite Welle (35) zur ersten Welle (31) ausgerichtet ist und ein drittes Zahnrad (37) trägt, das seinerseits in ein viertes Zahnrad (39) eingreift, das am Mittelteil (17) der Schnecke befestigt ist, so daß bei Kopplung der Wellen (31, 35) miteinander die Drehbewegung durch das angetriebene Seitenteil (19) der Schnecke auf das Mittelteil (17) und den anderen Seitenbereich (19) übertragen wird.

3. Schneidwerk nach Anspruch 1 und 2, dadurch gekennzeichnet, daß das Messer (7) ein gezahntes Messer ist, das durch eine Hin- und Herbewegungseinrichtung angetrieben wird.

4. Schneidwerk nach Anspruch 3, dadurch gekennzeichnet, daß die Hin- und Herbewegungseinrichtung einen zweiten Drehmotor (41) mit einem vorstehenden Teil (42) aufweist, das sich der Länge des Messers (7) nach hin- und herbewegt, und dadurch, daß die Einrichtung zwei Gruppen ausgerichteter Stangen (43, 45) aufweist, die parallel zueinander und zum Messer (7) sind, wobei jede Gruppe drei Stangen aufweist, die Stangen einer ersten (43) der Gruppen ausgerichteter Stangen direkt mit dem Messer (7) verbunden sind und die Stangen der zweiten Gruppe (45) mit denen der ersten Gruppe (43) über Vorrichtungen zum Übertragen einer Hin- und Herbewegung zwischen den beiden Gruppen verbunden sind. (Fig. 6)

5. Schneidwerk nach Anspruch 4, dadurch gekennzeichnet, daß jede der Vorrichtungen zum Übertragen der Hin- und Herbewegung ein festes Zahnrad (47) aufweist, das in ein Paar Zahnblöcke (49) eingreift, die als Zahnstangen wirken und auf zwei entsprechenden Stangen der Gruppen (43, 45) vorgesehen sind, wodurch die Bewegung in einer Richtung, in die eine mit dem vorstehenden Teil (42) des Drehmotors (41) verbundene Stange (43) der Gruppen (43, 45) versetzt ist, durch Berührung mit den nachfolgenden Stangen der gleichen Gruppe übertragen wird, was die Verschiebung des gezahnten Messers (7) in der gleichen Richtung und die Verschiebung - entlang der Gegenrichtung - der Stangen (45) der zweiten Gruppe bewirkt; und wodurch die Umkehr der Hin- und Herbewegung, in die die mit dem Hin- und Herbewegungsteil (42) gekoppelte Stange (43) versetzt ist, diese Stange (43) in eine umgekehrte Richtung zieht und über die Vorrichtungen (49, 47, 49) zum Übertragen der Hin- und Herbewegung die entsprechenden Stangen der zweiten Gruppe (45) in die Gegenrichtung schiebt.

6. Schneidwerk nach Anspruch 3, dadurch gekennzeichnet, daß die Hin- und Herbewegungseinrichtung zwei Gruppen ausgerichteter Stangen (51, 53) aufweist, die parallel zueinander und zum Messer (7) sind, wobei jede Gruppe drei Stangen aufweist, die Stangen einer ersten (43) der Gruppen ausgerichteter Stangen direkt mit dem Messer (7) verbunden sind, die Abschlußenden (55, 57) der entsprechenden Seitenstangen durch zwei Schwinghebel (59, 61) miteinander verbunden sind, die jeweils einen kurzen Hebel aufweisen, der mit den Stangen an beiden Enden verbunden ist, und dadurch, daß in der Mitte eines (59) der Schwinghebel die Welle eines zweiten Motors (41) verbunden ist, der die Drehrichtung periodisch umkehrt. (Fig. 7)

7. Schneidwerk nach einem der vorstehenden Ansprüche, dadurch gekennzeichnet, daß innerhalb der als zylindrischer Hohlkörper ausgebildeten Schnecke (3) eine Exzenterwelle (63) vorgesehen ist, deren Achse parallel zur Mittelachse der Schnecke (3) ist, aber nicht damit zusammenfällt, und die Welle in einem auswählbaren Winkel zu festen Wänden (65) befestigt ist, die die Teile der Schnecke unterteilen; und dadurch, daß die Exzenterwelle (63) leerlaufende Hülsen (67) trägt, auf denen Radialstifte (69) angeordnet sind, die jeweils ein entgegengesetztes Ende haben, das durch eine entsprechende Bohrung (71) in der Längswand der Schnecke (3) vorsteht, so daß die Relativposition der Welle (63) gegenüber der Schnekke (3) das Vorschieben oder Zurückziehen der Stifte (69) von der Wand der Schnecke bewirkt, wenn sich die Schnekke dreht, wodurch die Drehung der Schnecke (3) diese Spitzen zur maximalen Auskragung bringt, wenn sie sich in einer "hohen" Position befinden, d. h. weit vom Erdboden entfernt, und zu einer Auskragung von im wesentlichen null, kurz bevor sie den Erdboden berühren.

## Revendications

1. Un tablier de coupe (1) pour une machine moissonneuse-batteuse céréales comprenant une vis à grain (3), un ramasseur (5) qui peut être relevé par rapport à ladite vis à grain (3), et une lame de coupe (7) située entre des paires de dents (9), caractérisé en ce que :
a) le mouvement de la vis à grain (3), du ramasseur (5) et de la lame (7) est transmis d'un côté seulement dudit tablier de coupe ;
b) ledit ramasseur (5) est adapté pour être replié en trois parties, c'est-à-dire une partie centrale stationnaire (11) et deux parties latérales (13) qui peuvent être déplacées au moyen de vérins (15) actionnés par un fluide pressurisé ;
c) ladite vis à grain (3) est adaptée pour être repliée en trois parties, c'est-à-dire une partie centrale stationnaire (17), et deux parties latérales (19) qui peuvent être déplacées au moyen de vérins (15) actionnés par un fluide pressurisé, la transmission du mouvement de rotation étant excentrée par rapport à l'axe de rotation de ladite vis à grain (3) ;
d) ladite lame (7) est formée de trois parties, c'est-à-dire une partie fixe centrale (21) et deux parties latérales mobiles (23), et est entraînée à l'arrière et située entre lesdites paires de dents (9), ledit tablier de coupe (1) comprenant deux parties latérales adaptées pour être repliées et posées sur une partie centrale fixe.

2. Un tablier de coupe selon la revendication 1, caractérisé en ce que la transmission dudit mouvement de rotation à la vis à grain (3) est réalisée avec un premier moteur monté à une extrémité (25) d'une partie latérale (19) de ladite vis à grain qui entraîne ladite partie latérale (19) de la vis à grain ; à l'autre extrémité de ladite partie latérale (19), est prévue une paire de pignons (27, 29) ayant prise l'un avec l'autre, un desdits pignons (27) étant solidaire (2) et coaxial avec ladite partie latérale (19) de la vis à grain, alors que l'autre pignon (29) est solidaire et coaxial avec un premier arbre (31) dont l'axe est parallèle mais non coïncidant avec l'axe de rotation de la vis à grain ; en ce qu'un embrayage avant (33) est prévu pour coupler axialement ledit premier arbre (31) avec un second arbre (35) de la partie stationnaire centrale (17), ledit second arbre (35) étant aligné avec ledit premier arbre (31) et supportant un troisième pignon (37) qui à son tour vient en prise avec un quatrième pignon (39) solidaire de la partie centrale (17) de la vis à grain, de façon que lorsque lesdits arbres (31, 35) sont couplés l'un avec l'autre, le mouvement de rotation est transmis par la partie latérale entraînée (19) de la vis à grain à la partie centrale (17) et à l'autre partie latérale (19).

3. Un tablier de coupe selon la revendication 1 ou 2, caractérisé en ce que ladite lame (7) est une lame à dents de scie entraînée par un moyen de va-et-vient.

4. Un tablier de coupe selon la revendication 3, caractérisé en ce que ledit moyen de va-et-vient comprend un second moteur rotatif (41) présentant une partie saillante (42) effectuant un va-et-vient le long de la longueur de la lame (7), et en ce que ledit moyen comprend deux groupes d'arbres alignés (43, 45) parallèles entre eux et à ladite lame (7), chaque groupe comprenant trois arbres, les arbres d'un premier (43) desdits groupes d'arbres alignés étant directement reliés à ladite lame (7), et les arbres du second groupe (45) étant reliés à ceux du premier groupe (43) par l'intermédiaire d'organes pour la transmission d'un mouvement de va-et-vient entre lesdits deux groupes (figure 6).

5. Un tablier de coupe selon la revendication 4, caractérisé en ce que chacun desdits organes pour la transmission du mouvement de va-et-vient comprend un pignon fixé (47) en prise avec une paire de blocs dentés (49) servant de crémaillère et disposée sur deux arbres correspondants desdits groupes (43, 45) le mouvement dans une direction transmis à un arbre (43) desdits groupes (43, 45) relié à la partie en saillie (42) du moteur rotatif (41) étant transmis par contact aux arbres suivants du même groupe, provoquant ainsi le déplacement de la lame à dents de scie (7) dans la même direction et le déplacement - le long de la direction opposée - des arbres (45) du second groupe ; et l'inversion du mouvement de va-et-vient communiqué à l'arbre (43) couplé à la pièce de va-et-vient (42) tire dans une direction contraire un tel arbre (43) et grâce auxdits organes de transmission de mouvement de va-et-vient (49, 47, 49) pousse dans la direction opposée les arbres correspondants du deuxième groupe (45).

6. un tablier de coupe selon la revendication 3, caractérisé en ce que ledit moyen de va-et-vient comprend deux groupes d'arbres alignés (51, 53) parallèles entre eux et à ladite lame (7), chaque groupe comprenant trois arbres, les arbres d'un premier desdits groupes (43) d'arbres alignés étant reliés directement à ladite lame (7), les extrémités terminales (55, 57) des arbres latéraux correspondants étant reliés entre eux par deux leviers à genouillère à bras unique (59, 61), chacun comprenant un court levier relié de façon pivotante avec les arbres aux deux extrémités, et en ce que l'arbre d'un second moteur (41) qui inverse périodiquement la direction de rotation est relié au centre d'un desdits leviers à genouillère bras unique (59).

7. Un tablier de coupe selon l'une des revendications précédentes, caractérisé en ce que à l'intérieur de ladite vis à grain (3) formée comme un corps cylindrique creux est disposé un arbre excentrique (63) d'axe parallèle mais non coïncidant à l'axe central de la vis à grain (3), ledit arbre étant rattaché avec un angle réglable à des parois fixes (65) séparant les parties de la vis à grain et en ce que ledit arbre excentrique (63) supporte des douilles libres (67) sur lesquelles sont montées des goupilles radiales (69), chacune ayant une extrémité opposée faisant saillie à travers un trou correspondant (71) dans la paroi longitudinale de la vis à grain (3), de façon que la position relative de l'arbre (63) par rapport à la vis à grain (3) provoque la mise en saillie ou la rétraction desdites goupilles (69) de la paroi de la vis à grain lorsque la vis à grain tourne, la rotation de la vis à grain (3) amenant de telles goupilles à une saillie maximum lorsqu'elles sont en position haute, c'est-à-dire loin du sol, et à une saillie sensiblement nulle lorsqu'elles sont sur le point de rentrer en contact avec le sol.
